# EUROPÄISCHE PATENTSCHRIFT

(11) **EP 2 058 513 B1**
(45) Veröffentlichungstag und Bekanntmachung des Hinweises auf die Patenterteilung: **30.11.2011**
(21) Anmeldenummer: 08017519.3
(22) Anmeldetag: 07.10.2008
(51) Int. Cl.: F03D 7/02, F03D 7/04

(54) **Verfahren zum Betreiben einer Windenergieanlage**
Method for operating a wind farm
Procédé de fonctionnement d'une éolienne

(30) Priorität: 02.11.2007 DE 102007052863
(43) Veröffentlichungstag der Anmeldung: 13.05.2009
(73) Patentinhaber: REpower Systems AG, 22297 Hamburg (DE)
(72) Erfinder: Warfen, Karsten, 23795 Söhren (DE); Altemark, Jens, 24768 Rendsburg (DE)
(74) Vertreter: Grebner, Christian Georg Rudolf

(56) Entgegenhaltungen:
- EP-B1- 1 499 804
- DE-A1-102005 034 899

## Beschreibung

Die Erfindung betrifft ein Verfahren zum Betreiben einer Windenergieanlage, wobei die Windenergieanlage einen Rotor mit einer Rotorachse und wenigstens ein am Rotor angeordnetes Rotorblatt aufweist, wobei das Rotorblatt um eine Rotorblattachse mit einem vorbestimmten Rotorblattverstellwinkel einstellbar ist oder eingestellt wird. Darüber hinaus betrifft die Erfindung eine Windenergieanlage mit einem Rotor und wenigstens einem am Rotor angeordneten, winkelverstellbaren Rotorblatt.

Windenergieanlagen der Patentanmelderin sind unter der Bezeichnung 5M, MM92, MM82, MM70 sowie MD77 bekannt.

Diese bekannten Windenergieanlagen weisen einen Rotor mit drei Rotorblättern auf, wobei der Rotor zur Erzeugung einer elektrischen Leistung mit einem Generator gekoppelt ist. Der Generator ist ferner mit einem elektrischen Netz eines Netzbetreibers gekoppelt, um erzeugte elektrische Energie in das Netz einzuspeisen.

Bei vielen Windenergieanlagen sind die Rotorblätter um ihre Rotorblattachsen winkelverstellbar ausgebildet. Auf diese Weise kann z.B. die Ausrichtung der Rotorblätter je nach Windaufkommen so eingestellt werden, dass die Energieaufnahme aus dem Wind geregelt bzw. angepasst werden kann. Zur Verstellung der Rotorblätter sind die Windenergieanlagen so ausgebildet, dass wenigstens ein Blattverstellsystem für alle drei Rotorblätter vorgesehen ist.

Vorzugsweise ist bei den Windenergieanlagen zu jedem Rotorblatt mindestens eine Rotorblattverstelleinrichtung vorgesehen, wobei die Rotorblattverstelleinrichtung unter anderem einen Blattverstellantrieb mit einem Antriebsmotor aufweist. In der Regel wird die relativ hohe Drehzahl des Rotorblattantriebsmotors über ein Getriebe hoher Übersetzung auf ein langsam drehendes Antriebsrad übersetzt, welches mit einem direkt mit dem Rotorblatt verbundenen Zahnkranz kämmt. Weiterhin weist die Rotorblattverstelleinrichtung eine Steuerungseinrichtung auf, über die die Steuerung des Blattverstellantriebs erfolgt.

Diese Windenergieanlagen mit so genannten pitchverstellbaren Rotorblättern haben aus Gründen der Betriebssicherheit in der Regel eine Notantriebseinrichtung mit einem autarken Energiespeicher, beispielsweise einen Akkumulator. Diese Notantriebseinrichtung mit ihrem eigenen Energiespeicher gilt als Reserve für Störfälle, insbesondere dann, wenn das Hauptsystem für den Pitchverstellantrieb bzw. Rotorblattverstellantrieb aufgrund eines Defekts oder aufgrund eines Ausfalls der Energieversorgung nicht mehr arbeitet. Um auch unter diesen Umständen die Windenergieanlage sicher stillsetzen zu können, ist die Notantriebseinrichtung vorgesehen.

In der Regel werden die Windenergieanlagen durch Drehen der Rotorblätter in die sogenannte Fahnenstellung heruntergefahren. Mit der Fahnenstellung wird das Herausdrehen der Rotorblätter aus dem Wind bezeichnet, so dass, wie bei einer Fahne, dem Wind nur eine minimale Angriffsfläche geboten wird und die Anlage aufgrund dessen gestoppt oder zumindest in eine nur sehr langsame Drehbewegung versetzt wird. Daher wird die Windenergieanlage in einer Normalbetriebsart die Rotorblätter mittels eines Pitchkreises und in einem Notbetrieb mittels einer Notkreises betätigen.

In DE-A-10 2005 034 899 ist eine Windenergieanlage mit einem Generator zur Erzeugung elektrischer Energie, einem den Generator antreibenden Rotor mit pitchverstellbaren Rotorblättern und einer Zentralsteuerungseinrichtung offenbart. Ferner sind Einzelpitcheinrichtungen für die Rotorblätter vorgesehen, die einen Verstellantrieb, eine Kommunikationsverbindung zur Zentralsteuereinrichtung und einen Regler umfassen, wobei die Rotorblätter zum Abfahren der Windenergieanlage in eine Abschaltposition verstellbar sind. Des Weiteren umfassen die Einzelpitcheinrichtungen einen Störfalldetektor, der zum Erkennen von abnormalen Betriebszuständen ausgebildet ist, der mit einer Auslöseeinrichtung verbunden ist, die ein Verstellen des jeweiligen Rotorblatts in eine Abschaltposition bewirkt.

Ausgehend von diesem Stand der Technik besteht die Aufgabe der Erfindung darin, den Betrieb einer Windenergieanlage zu verbessern und insbesondere die Wartung einer Windenergieanlage zu vereinfachen.

Die Aufgabe wird bei einem Verfahren zum Betreiben einer Windenergieanlage, wobei die Windenergieanlage einen Rotor mit einer Rotorachse und wenigstens ein am Rotor angeordnetes Rotorblatt ausweist, wobei das Rotorblatt um eine Rotorblattachse mit einem vorbestimmten Rotorblattwinkel einstellbar ist oder eingestellt wird, dadurch weitergebildet, dass das wenigstens eine Rotorblatt in eine Ruheposition gedreht wird, nach Erreichen einer ersten vorbestimmten Drehposition des Rotorblatts die Drehung des Rotorblatts gebremst wird und die in Folge des Bremsvorgangs erreichte Stillstandsposition des Rotorblatts erfasst wird.

Die Erfindung beruht auf dem Gedanken, dass bei einer abgeschalteten bzw. stillgesetzten Windenergieanlage die Rotorblätter in eine Fahnenstellung jeweils mittels eines Verstellmotors gebracht werden und nach Erreichen der Fahnenstellung bzw. einer ersten vorbestimmten Drehposition der entsprechende Rotorblattverstellmotor und damit die Drehung des Rotorblatts gebremst werden. Nach Beendigung des Bremsvorgangs befindet sich das Rotorblatt in einer Stillstandsposition, die dann erreicht ist, wenn der Rotorblattverstellmotor vollständig abgebremst wird oder ist.

Hierdurch wird erfindungsgemäß eine vorausschauende Wartung einer Windenergieanlage erzielt, da erfindungsgemäß das Bremsmoment sowie das Bremsverhalten des Rotorblattverstellmotors bzw. des Pitchmotors anhand der Stillstandposition des Rotorblatts überwacht wird. Eine Bremse bzw. eine entsprechende Arretierung des Rotorblattverstellmotors ist für die Windenergieanlage bei einem Netzausfall zwingend erforderlich, da ein Durchrutschen der Bremse bzw. der Arretierung unkontrollierte Belastungszustände der Windenergieanlage zur Folge hätte, da beispielsweise die Rotorblätter bei einer funktionsuntüchtigen Bremse frei drehen könnten.

Durch die erfasste Stillstandsposition des Rotorblatts wird gezielt das Bremsmoment der Bremseinrichtung des Rotorblattverstellmotors bzw. des Pitchmotors überwacht, so dass bei Aufzeichnung der Stillstandspositionen über vorbestimmte längere Zeiträume Aussagen über den Verschleiß von Bauteilen an der Rotorblattbremse erreicht werden. Somit werden auf insbesondere automatische Weise eine sensorlose und/oder stufenlose sowie einfache Überwachung des Bremsmoments sowie der Bremseigenschaften der Bremse im jeweiligen Rotorblattverstellmotor eines Rotorblatts erreicht.

Anhand der erfassten sowie aufgezeichneten Betriebszustände im Hinblick auf die erreichte Stillstandsposition können zuverlässig Auswertungen über das Bremsverhalten eines Rotorblattverstellmotors durchgeführt werden, anhand derer die Wartungsmaßnahmen an einem Rotorblattverstellmotor zuverlässig angepasst werden können.

Insbesondere wird bei der Windenergieanlage das Rotorblatt durch äußere Windbewegungen um eine (im Wesentlichen) quer zur Rotorblattachse vorgesehene Rotorachse rotierend angetrieben.

Überdies zeichnet sich eine Weiterbildung des Verfahren dadurch aus, dass die Stillstandsposition des Rotorblatts erfasst wird, nachdem das Rotorblatt in eine Ruheposition, insbesondere nach oder bei einer Abschaltung der Windenenergieanlage, gedreht wurde.

Vorzugsweise wird nach Abschaltung der Windenergieanlage oder bei abgeschalteter Windenergieanlage, das wenigstens eine Rotorblatt in eine Ruheposition gedreht.

Die Wartung wird ferner verbessert, wenn die Bremsstillstandsposition als Istwert mit einem vorbestimmten Brems-Sollwert, insbesondere der Bremse des Blattverstellungsmechanismus, verglichen wird. Hierdurch wird auf einfache Weise überprüft, ob die Bremse des Blattverstellmotors intakt ist bzw. (noch) ausreichend funktioniert. Wird der Brems-Sollwert vom Ist-Wert um einen vorbestimmten Wert über- oder unterschritten, kann somit auf eine Weise festgestellt werden, ob der Verstellmotor eine funktionsuntüchtige Bremse hat.

Anhand der erfassten Stillstandsposition des Rotorblatts nach einer Bremsung kann anhand des Vergleichs bzw. der Differenz zwischen dem Brems-Sollwert und der Stillstandsposition der Winkel bestimmt werden, zwischen der ersten Drehposition, bei der die Bremsung des Rotorblatts aktiviert wird, und der Stillstandsposition und damit auch der Bremsweg ermittelt werden. Anhand des durchgeführten Vergleichs zwischen der Ist-Position und dem Brems-Sollwert, der beispielsweise für eine neu errichtete oder frisch gewartete Windenergieanlage bestimmt wird oder ist, wird einer Fernüberwachungszentrale oder dem Wartungspersonal eine zuverlässige und aussagekräftige Größe an die Hand gegeben, anhand der der Verschleiß an den Bauteilen für das Abbremsen eines Rotorblatts bestimmt oder abgeschätzt wird, wobei das Rotorblatt hierbei insbesondere in eine Fahnenstellung gebracht wird.

Dazu kann beispielsweise der Brems-Sollwert als Sollwert für einen bestimmten Winkelbereich, innerhalb dessen eine Bremsung bei einer intakten Bremse erfolgt, vorgegeben werden. Alternativ kann der Brems-Sollwert auch als Bremsweg bzw. Bremsstrecke vorbestimmt werden oder sein.

Hierzu wird insbesondere in einer Ausführungsform vorgeschlagen, dass der Brems-Sollwert als Mittelwert von mehreren Messungen der Stillstandsposition aus mehreren Bremsvorgängen ermittelt wird. Dies wird beispielsweise bei einer neu errichteten Windenergieanlage oder unmittelbar nach der Durchführung einer Wartung an der Rotorblattverstelleinrichtung bzw. an den Rotorblättern durchgeführt. Beispielsweise wird bei einer neu errichteten Windenergieanlage vor der Inbetriebnahme der Differenzweg der Blattstellung, an dem die Pitchmotorbremse schließt, d.h. bei der ersten vorbestimmten Drehposition, bis zu dem Zeitpunkt bzw. der Position, an der das Rotorblatt arretiert feststeht, als Referenzwert gemessen. Hiervon werden beispielsweise mehrere Messungen, z.B. zwischen 20 bis 40 Messungen, an jedem Rotorblatt einzeln und selbstständig vorgenommen, um einen Mittelwert für den Brems-Sollwert als spezifischen Referenzwert für das einzelne Rotorblatt zu erhalten. Vorzugsweise werden diese Messungen unter Verwendung einer Notantriebseinrichtung mit einem autarken Energiespeicher, z.B. Batterie, durchgeführt. Nach Ermittlung des gemittelten, für jedes Rotorblatt individuell vorbestimmten Brems-Sollwerts werden diese Sollwerte abgespeichert und bilden somit die Basis, um anhand der Brems-Sollwerte die Abweichungen der ermittelten Stillstandspositionen jedes Rotorblatts zu ermitteln.

Darüber hinaus kann erfindungsgemäß weiterhin in einer Ausgestaltung der Mittelwert dynamisch, d.h. fortlaufend, während des Betriebs einer bestehenden Windenergieanlage angepasst werden, so dass beispielsweise ein Brems-Sollwert über eine vorbestimmte Anzahl von Bremsvorgängen ermittelt wird. Wird festgestellt, dass die neu ermittelte Stillstandsposition vom gesicherten Brems-Sollwert abweicht, so kann die ermittelte Differenz zwischen den beiden Größen als Zustandsmaß der Bremse verwendet werden.

Insbesondere zeichnet sich eine Weiterbildung des Verfahrens dadurch aus, dass bei Überschreiten des Brems-Sollwerts eine Warnmitteilung oder Wartungsmitteilung erzeugt wird, wobei bei Überschreiten oder Unterschreiten einer vorbestimmten Differenz zwischen der gemessenen Stillstandsposition und dem Brems-Sollwert erkannt wird, dass der Verschleiß an der Bremse des Rotorblattverstellmotors groß ist, so dass eine Warnmitteilung in einer Auswerteeinheit erzeugt wird und dem Warnpersonal oder Bedienpersonal mitgeteilt bzw. angezeigt wird. Beispielsweise könnte die Warnmitteilung den Hinweis enthalten, dass das Bremsmoment der Bremse eines bzw. der Pitchmotoren zu niedrig ist, da aufgrund der erfassten Stillstandspositionen sowie der anschließenden Auswertung festgestellt wird, dass ein Verschleiß vorliegt oder die Bremseinrichtung insgesamt nicht funktionstüchtig ist.

Zweckmäßigerweise werden sowohl die festgestellten Differenzen zwischen der Stillstandsposition und dem Brems-Sollwert ermittelt und abgespeichert, wobei zu einer vorausschauenden Wartung die entsprechenden Werte abgespeichert werden und entsprechend dem Wartungspersonal angezeigt bzw. übermittelt werden. Anhand der festgestellten und abgespeicherten Abweichungen kann der zeitliche Verlauf der Bremseigenschaften der Bremsen des Verstellmotors ermittelt werden, wobei es in einer Weiterbildung möglich ist, aufgrund der festgestellten Werte den Zeitpunkt für die nächste durchzuführende Wartung zu bestimmen.

Überdies ist es in einer Weiterbildung vorteilhaft, wenn Warnmitteilungen oder Wartungsmitteilungen mit unterschiedlicher Priorität erzeugt werden. Wird beispielsweise erstmalig ein Überschreiten eines Differenzwertes zwischen der Stillstandsposition und dem entsprechenden Brems-Sollwert festgestellt, so wird diese erste Abweichung mitgeteilt. Werden innerhalb einer vorbestimmten Anzahl von weiteren Bremsvorgängen und/oder innerhalb einer bestimmten Zeitdauer nach erstmaliger Abweichung der Stillstandsposition außerhalb eines Toleranzbereiches bzw. Differenzbereiches weitere Abweichungen außerhalb des Toleranzbereiches bzw. des Differenzbereiches in einer entsprechenden Auswerteeinrichtung festgestellt, so kann eine Wartungsmitteilung einer höheren Priorität erzeugt werden, wobei beispielsweise auch die Anlage bis zur Durchführung der Wartung stillgesetzt wird.

Darüber hinaus ist in einer Weiterbildung vorgesehen, dass während des Abbremsens des Rotorblatts und bei Überschreiten einer zweiten vorbestimmten Drehposition des Rotorblatts eine Wartungsmitteilung betreffend den Zustand einer für den Bremsvorgang eingesetzten Bremse erzeugt wird.

Typischerweise verfügt jedes Pitchsystem eines Rotorblatts für die Anordnung des Rotorblatts in der Fahnenstellung über zwei Endschalter, wobei ein erster Endschalter das Drehen des Rotorblatts bzw. der Rotorblätter über die Fahnenstellung hinaus detektieren soll. Der erste Endschalter (erste vorbestimmte Drehposition des Rotorblatts) liegt beispielsweise bei 91° ° und der zweite Endschalter (zweite vorbestimmte Drehposition des Rotorblatts) bei 95°. Wird der erste Endschalter durch Drehen des Rotorblatts in die Fahnenstellung ausgelöst, wird das Rotorblatt mechanisch über die Bremse des Pitchsystems bzw. des Rotorblattverstellmotors gebremst. Hierbei wird das Rotorblatt in seiner Drehung noch vor dem zweiten Endschalter im funktionstüchtigen Zustand der Anlage zum Stehen kommen.

Der zweite Endschalter (beispielsweise bei 95°-Stellung des Rotorblatts) wird dann ausgelöst, wenn das Rotorblatt vorher nicht abgebremst werden kann, so dass das Betriebsführungssystem einen Fehler im Bremssystem bzw. an den Bremsen des Verstellmotors erkennt. Wird trotz des Abbremsens des Rotorblatts der zweite Endschalter bzw. die zweite vorbestimmte Drehposition des Rotorblatts überfahren, wird über das Betriebsführungssystem dem Wartungsservice beispielsweise durch eine Wartungsmitteilung mitgeteilt, dass eine Wartung an der Windenergieanlage dringend durchgeführt werden muss.

Außerdem ist es in einer Weiterführung des Verfahrens vorteilhaft, wenn die Stillstandsposition des Rotorblatts in vorbestimmten Zeitdauern erfasst wird. Beispielsweise werden die Stillstandspositionen eines Rotorblatts insbesondere dann erfasst, wenn routinemäßig ein Selbsttest in regelmäßigen, z.B. wochenweise, Abständen durchgeführt wird. Diese Selbsttests werden insbesondere unter Verwendung von Notantriebseinrichtungen, d.h. bei einer so genannten "Notfahrt" durchgeführt.

Vorteilhafterweise wird die Stillstandsposition während eines Sicherheitstests oder eines Selbsttests der Windenergieanlage erfasst.

Weiterhin zeichnet sich das Verfahren in einer Weiterbildung dadurch aus, dass das Bremsen der Drehung des Rotorblatts in einer Fahnenstellung des Rotorblatts durchgeführt wird.

Um eine vorausschauende Wartung der Pitchmotorbremsen bzw. der Rotorblattbremse zu ermöglichen, ist ferner vorteilhafterweise vorgesehen, dass die Stillstandspositionen des Rotorblatts in einer Speichereinheit gespeichert und/oder in einer Auswerteeinheit ausgewertet werden. Dies kann beispielsweise innerhalb des eigenen Betriebsführungssystems der Windenergieanlage oder dezentral an einer Fernüberwachungseinheit durchgeführt werden.

Ferner wird die Aufgabe der Erfindung gelöst durch eine Windenergieanlage mit einem Rotor und wenigstens einem am Rotor angeordneten, winkelverstellbaren Rotorblatt, wobei die Windenergieanlage gemäß dem voranstehend beschriebenen Verfahren zum Betreiben der Windenergieanlage betrieben wird.

Die Erfindung wird nachstehend ohne Beschränkung des allgemeinen Erfindungsgedankens anhand der beigefügten Zeichnungen näher beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung wesentlicher Komponenten einer Windenergieanlage und
- Fig. 2: ein vereinfachtes Ablaufschema gemäß der Erfindung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

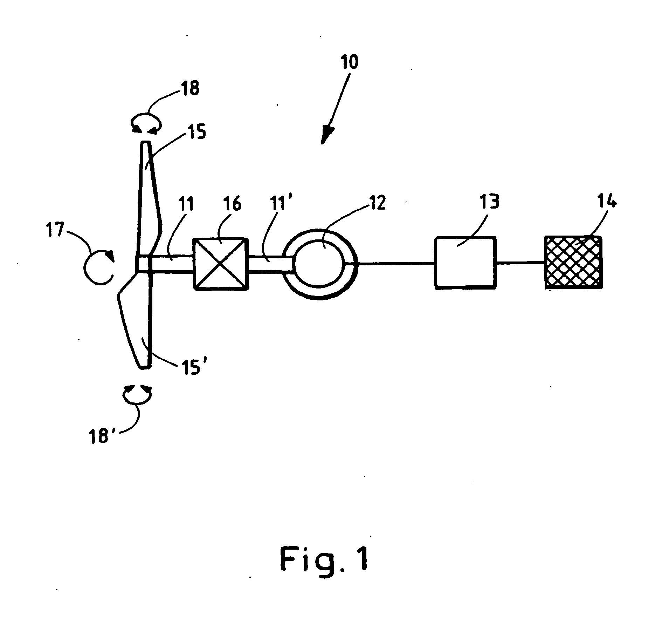

Fig. 1 zeigt sehr schematisch eine Windenergieanlage 10, umfassend einen Rotor 11, an dem Rotorblätter 15 und 15' angeordnet sind. Der Rotor 11 ist mit einem Getriebe 16 verbunden. Das Getriebe 16 ist über eine Welle 11' mit einem Generator 12 verbunden. Der Rotor 11 ist drehbar, und zwar entsprechend einer angedeuteten Rotationsbewegung 17. Durch entsprechende Rotation des Rotors 11 und über das Getriebe 16 auch der Welle 11' kann ein üblicher Generator 12 beispielsweise ein Asynchron-Generator eine elektrische Leistung erzeugen, die über einen Umrichter 13 einem Netz 14, an das beispielsweise Verbraucher angeschlossen sind, zur Verfügung gestellt werden kann.

Entsprechende übliche Regelungen drehzahlvariabel betriebener Anlagen sind beispielsweise in dem Buch von Siegfried Heier, "Windkraftanlagen, Systemauslegung, Netzintegration und Regelung", Verlag Teubner, 2005, Seite 320 bis Seite 328, beschrieben.

In Fig. 1 ist auch noch die Veränderung der Blattwinkel der Rotorblätter 15, 15' angedeutet, und zwar über eine Blattwinkelverstellbewegung 18 bzw. 18'. Durch die Verstellung des Blattwinkels (Pitch) der Rotorblätter 15 und 15' wird die Leistungsaufnahme des Rotors 11 bzw. des oder der angeschlossenen Triebstrangs bzw. Triebstränge sowie die zu dem Rotor gehörenden Rotorblätter 15 und 15' beeinflusst.

Darüber hinaus weist jedes Rotorblatt 15, 15' eine Einzelpitcheinrichtung auf, um den Blattwinkel der Rotorblätter entsprechend einer Vorgabe mit einem vorbestimmten Rotorblatteinstellwinkel (Pitchwinkel) einzustellen. Darüber hinaus verfügt die Einzelpitcheinrichtung zweckmäßigerweise über am Rotor angeordnete Messaufnehmer, wodurch die einzelne Pitcheinrichtung befähigt ist, autark und ohne Rückgriff auf eine zentrale Steuereinrichtung und deren Sensoren bzw. Signalverarbeitung die erforderlichen Messsignale zu gewinnen. Als Messaufnehmer können insbesondere Rotorblatteinstellwinkelsensor, Rotorpositionswinkelsensor, Rotordrehzahlgeber, Längsbeschleunigungssensor, Querbeschleunigungssensor, Drehbeschleunigungssensor, Belastungssensor und/oder Zentrifugalbeschleunigungssensor an der Wurzel der Rotorblätter oder weitere, dem Fachmann bekannte Sensoren vorgesehen sein.

Darüber hinaus ist zweckmäßigerweise die Einzelpitcheinrichtung jedes Rotorblatts mit einem Notmodul versehen, das bei Ausfall übriger Komponenten, insbesondere des Reglers, eine Notfahrt in eine Abschaltposition bewirkt. Damit ist die Einzelpitcheinrichtung in der Lage, bei einem Versagen eines Reglers selbsttätig und selbstständig mittels Notfahrt das Rotorblatt in seine Abschaltposition, d.h. in seine Fahnenstellung, zu bringen. Die Notfahrt erfolgt günstigerweise ungeregelt, so dass ein Ausfall des Reglers oder von Elementen der Messeinrichtung ohne Einfluss auf die Notfahrt bleibt.

In DE 10 2005 034 899 A1 ist eine gattungsgemäße Windenergieanlage mit Einzelpitcheinrichtungen offenbart. Darüber hinaus ist in DE 10 2006 009 127 A1 eine Energieversorgung für eine Blattverstellungseinrichtung einer Windenergieanlage beschrieben. Beide Dokumente werden vollumfänglich und ausdrücklich in die Offenbarung der vorliegenden Patentanmeldung aufgenommen, wobei zu weiteren Einzelheiten für die Einzelpitcheinrichtungen und die Energieversorgung auf diese Dokumente explizit Bezug genommen wird. Ferner wird auch das Dokument DE 103 38 127 A1 vollumfänglich in die Offenbarung der vorliegenden Anmeldung mit aufgenommen, wobei zu weiteren Einzelheiten einer Einzelpitcheinrichtung bzw. Rotorblattverstelleinrichtung ausdrücklich auch auf dieses Dokument Bezug genommen wird.

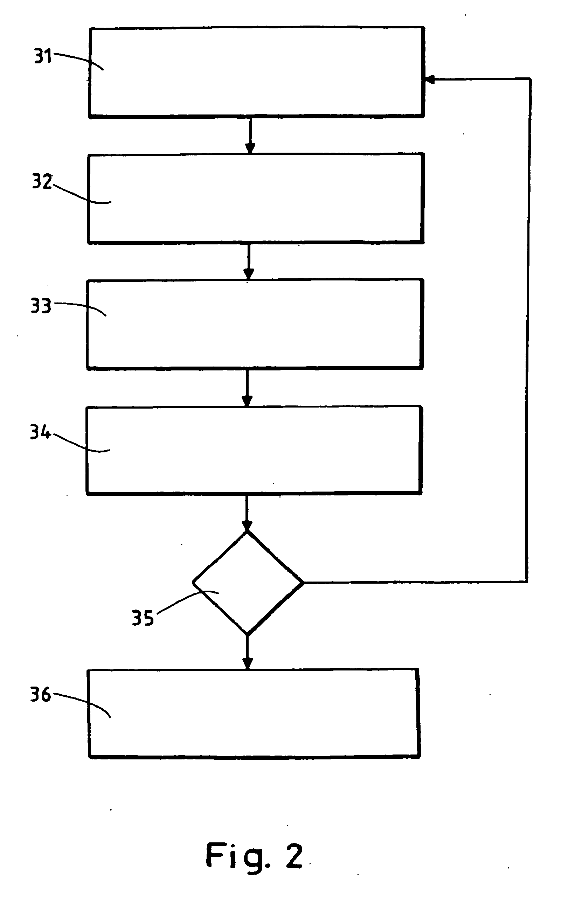

Fig. 2 zeigt schematisch den Ablauf zur Prüfung des Drehmoments bzw. zur Überwachung der Bremseigenschaften einer Bremse einer Einzelpitchverstelleinrichtung für ein Rotorblatt einer Windenergieanlage.

Im Verfahrensschritt 31 befindet sich die Windenergieanlage im normalen Betrieb, d.h. mit der Windenergieanlage wird elektrische Leistung in ein Verbrauchernetz eingespeist. Nach einer vorbestimmten Zeitdauer wird ein Selbsttest und somit ein Bremsprogramm der Windenergieanlage im Verfahrensschritt 32 durchgeführt, wobei dieser Selbsttest in regelmäßigen Zeitabständen, z.B. wochenweise, an der Windenergieanlage bei vorzugsweise geringer Windgeschwindigkeit des Winds ausgeführt wird.

Hierbei werden die Rotorblätter unter Verwendung einer Notantriebseinrichtung mittels des Rotorblattverstellmotors in die so genannte Fahnenstellung gedreht. Dazu wird beispielsweise als Antriebsmotor ein Gleichstrommotor mit einer Batterie direkt gekoppelt, so dass das entsprechende Rotorblatt aus dem Wind heraus in die so genannte Fahnenstellung gebracht wird. Während dieser batterieunterstützten Drehung des Rotorblatts wird auch gleichzeitig die Notenergieversorgung in Form der Batterie getestet. Ein derartiger Batterietest findet üblicherweise an einer Windenergieanlage im wöchentlichen Turnus statt.

Anschließend wird im Verfahrensschritt 33 beim Drehen des Rotorblatts oder der Rotorblätter in die Fahnenstellung der Moment des Schließens der Pitchmotorbremse bzw. der Bremse des Rotorblattverstellmotors erfasst, wobei diese (erste) Drehposition des Rotorblatts oder der Rotorblätter beispielsweise bei 91° liegt. Durch die Auslösung dieses ersten Endschalters an der ersten Drehposition, an der die Bremse des Verstellmotors aktiviert wird, wird die Drehung des Rotorblatts abgebremst, wobei anschließend im Verfahrensschritt 33 der Winkel vom Moment des Schließens der Pitchmotorbremse (erste Drehposition) bis zum Stillstand des Motors (Stillstandsposition des Rotorblatts) gemessen wird.

Anhand des gemessenen Winkels, d.h. der gemessenen Stillstandsposition zwischen dem Schließen der Pitchmotorbremse bis zum Stillstand des Motors und der Drehung des Rotorblatts, erfolgt im Verfahrensschritt 34 ein Vergleich der Stillstandsposition mit einem gespeicherten Sollwert, der beispielsweise nach Errichtung einer neuen Windenergieanlage anhand von mehreren Bremsvorgängen an den Rotorblättern individuell für jedes Rotorblatt bestimmt wird. Hierdurch wird ein Brems-Sollwert für eine Stillstandsposition des Rotorblatts bei aktivierter Bremse des Rotorblattverstellmotors erreicht.

Anhand eines nachfolgenden Vergleichsschrittes 35 wird geprüft, ob die gemessene Stillstandsposition bzw. der gemessene Stillstandswinkel innerhalb eines vorbestimmten Toleranzbereiches um den Brems-Sollwert herum liegt. Ist die gebildete Differenz zwischen dem Sollwert und der gemessenen Stillstandsposition bzw. Stillstandswinkel außerhalb des Toleranzbereiches und damit größer als eine vorbestimmte Differenz, wird im Verfahrensschritt 36 eine Warnung an eine Fernwarteeinrichtung erzeugt und übermittelt, so dass dem Servicepersonal angezeigt wird, dass an der Windenergieanlage eine Wartung des Bremssystems des Pitchmotors durchzuführen ist.

Ist dagegen die gemessene Differenz zwischen der Stillstandsposition und dem Sollwert innerhalb des Toleranzbereiches, wird anschließend die Windenergieanlage wie im Verfahrensschritt 31 wieder in den normalen Betrieb übernommen.

### Bezugszeichenliste

- 10: Windenergieanlage
- 11: Rotor
- 11': Welle
- 12: Generator
- 13: Umrichter
- 14: Netz
- 15, 15': Rotorblatt
- 16: Getriebe
- 17: Rotationsbewegung
- 18, 18': Blattverstellbewegung (pitchen)
- 31: Verfahrensschritt
- 32: Verfahrensschritt
- 33: Verfahrensschritt
- 34: Verfahrensschritt
- 35: Vergleich
- 36: Verfahrensschritt

## Patentansprüche

1. Verfahren zum Betreiben einer Windenergieanlage (10), wobei die Windenergieanlage (10) einen Rotor (11) mit einer Rotorachse und wenigstens ein am Rotor (11) angeordnetes Rotorblatt (15, 15') aufweist, wobei das Rotorblatt (15, 15') um eine Rotorblattachse mit einem vorbestimmten Rotorblattverstellwinkel einstellbar ist oder eingestellt wird, wobei das wenigstens eine Rotorblatt (15, 15') in eine Ruheposition gedreht wird, nach Erreichen einer ersten vorbestimmten Drehposition des Rotorblatts (15, 15') die Drehung des Rotorblatts (15, 15') gebremst wird, **dadurch gekennzeichnet, dass** die in Folge des Bremsvorgangs erreichte Stillstandsposition des Rotorblatts (15, 15') erfasst wird.

2. Verfahren nach Anspruch 1, **dadurch gekennzeichnet, dass** die Stillstandsposition des Rotorblatts (15, 15') erfasst wird, nachdem das Rotorblatt (15, 15') in eine Ruheposition, insbesondere nach oder bei einer Abschaltung der Windenenergieanlage (10), gedreht wurde.

3. Verfahren nach Anspruch 1 oder 2, **dadurch gekennzeichnet, dass** nach Abschaltung der Windenergieanlage (10) oder bei abgeschalteter Windenergieanlage (10) das wenigstens eine Rotorblatt (15, 15') in eine Ruheposition gedreht wird.

4. Verfahren nach einem der Ansprüche 1 bis 3, **dadurch gekennzeichnet, dass** die Stillstandsposition bzw. die Bremsstillstandsposition als Istwert mit einem vorbestimmten Brems-Sollwert verglichen wird.

5. Verfahren nach Anspruch 4, **dadurch gekennzeichnet, dass** der Brems-Sollwert als Mittelwert von mehreren Messungen der Stillstandsposition aus mehreren Bremsvorgängen ermittelt wird.

6. Verfahren nach Anspruch 4 oder 5, **dadurch gekennzeichnet, dass** bei Überschreiten des Brems-Sollwerts eine Warnmitteilung oder Wartungsmitteilung erzeugt wird.

7. Verfahren nach einem der Ansprüche 1 bis 6, **dadurch gekennzeichnet, dass** während des Abbremsens des Rotorblatts (15, 15') und bei Überschreiten einer zweiten vorbestimmten Drehposition des Rotorblatts (15, 15') eine Wartungsmitteilung betreffend den Zustand einer für den Bremsvorgang eingesetzten Bremse erzeugt wird.

8. Verfahren nach einem der Ansprüche 1 bis 7, **dadurch gekennzeichnet, dass** die Stillstandsposition des Rotorblatts (15, 15') in vorbestimmten Zeitdauern erfasst wird.

9. Verfahren nach einem der Ansprüche 1 bis 8, **dadurch gekennzeichnet, dass** die Stillstandsposition während eines Sicherheitstestes oder eines Selbsttests der Windenergieanlage (10) erfasst wird.

10. Verfahren nach einem der Ansprüche 1 bis 9, **dadurch gekennzeichnet, dass** das Bremsen der Drehung des Rotorblatts (15, 15') in einer Fahnenstellung des Rotorblatts (15, 15') durchgeführt wird.

11. Verfahren nach einem der Ansprüche 1 bis 10, **dadurch gekennzeichnet, dass** die Stillstandspositionen des Rotorblatts (15, 15') in einer Speichereinheit gespeichert und/oder in einer Auswerteeinheit ausgewertet werden.

12. Windenergieanlage (10) mit einem Rotor (11) und wenigstens einem am Rotor (11) angeordneten, winkelverstellbaren Rotorblatt (15, 15'), **dadurch gekennzeichnet, dass** die Windenergieanlage (10) gemäß einem Verfahren nach einem der Ansprüche 1 bis 11 betrieben wird.

## Claims

1. A method of operating a wind turbine generator system (10), wherein the wind turbine generator system (10) includes a rotor (11) with a rotor axis and at least one rotor blade (15, 15') arranged on the rotor (11), wherein the rotor blade (15, 15') is adjusted or adjustable about a rotor blade axis with a predetermined rotor blade setting angle, wherein the at least one rotor blade (15, 15') is rotated into a rest position, after reaching a first predetermined rotary position of the rotor blade (15, 15') the rotation of the rotor blade (15, 15') is braked, **characterised in that** the stationary position of the rotor blade (15, 15') reached in the course of the braking process is determined.

2. A method as claimed in claim 1, **characterised in that** the stationary position of the rotor blade (15, 15') is determined after the rotor blade (15, 15') has been rotated into a rest position, particularly after or during switching off of the wind turbine generator system (10).

3. A method as claimed in claim 1 or 2, **characterised in that** after switching off the wind turbine generator system (10) or with the wind turbine generator system (10) switched off the at least one rotor blade (15, 15') is rotated into a rest position.

4. A method as claimed in one of claims 1 to 3, **characterised in that** the stationary position or the braked stationary position is compared as an actual value with a predetermined braked desired value.

5. A method as claimed in claim 4, **characterised in that** the braked desired value is determined as a mean value of a number of measurements of the stationary position from different braking processes.

6. A method as claimed in claim 4 or 5, **characterised in that** when the braked desired value is exceeded, a warning signal or maintenance signal is produced.

7. A method as claimed in one of claims 1 to 6, **characterised in that** during the braking of the rotor blade (15, 15') and when a second predetermined rotary position of the rotor blade (15, 15') is exceeded, a maintenance signal relating to the condition of a brake used for the braking process is produced.

8. A method as claimed in one of claims 1 to 7, **characterised in that** the stationary position of the rotor blade (15, 15') is determined in predetermined time periods.

9. A method as claimed in one of claims 1 to 8, **characterised in that** the stationary position is determined during a safety test or a self test of the wind turbine generator system (10).

10. A method as claimed in one of claims 1 to 9, **characterised in that** the braking of the rotation of the rotor blade (15, 15') is performed in a feathered position of the rotor blade (15, 15').

11. A method as claimed in one of claims 1 to 10, **characterised in that** the stationary position of the rotor blade (15, 15') is stored in a memory unit and/or analysed in an analysis unit.

12. A wind turbine generator system (10) with a rotor (11) and at least one angularly adjustable rotor blade (15, 15') arranged on the rotor (11), **characterised in that** the wind turbine generator system (10) is operated in accordance with a method as claimed in one of claims 1 to 11.

## Revendications

1. Procédé de fonctionnement d'une éolienne (10), ladite éolienne (10) comportant un rotor (11) avec un axe de rotor et au moins une pale de rotor (15, 15') montée sur le rotor (11), la pale de rotor (15, 15') étant apte à être réglée ou étant réglée avec un angle de réglage prédéfini autour d'un axe de la pale, ladite au moins une pale de rotor (15, 15') étant amenée par rotation dans une position de repos, la rotation de la pale de rotor (15, 15') étant freinée une fois que la pale de rotor (15, 15') a atteint une première position de rotation prédéterminée, **caractérisé en ce que** la position d'immobilisation de la pale de rotor (15, 15'), atteinte à la suite du processus de freinage, est enregistrée.

2. Procédé selon la revendication 1, **caractérisé en ce que** la position d'immobilisation de la pale de rotor (15, 15') est enregistrée après que la pale de rotor (15, 15') a été amenée par rotation dans une position de repos, en particulier après ou au moment d'une déconnexion de l'éolienne (10).

3. Procédé selon la revendication 1 ou 2, **caractérisé en ce qu'**après la déconnexion de l'éolienne (10) ou lorsque l'éolienne (10) est déconnectée, ladite au moins une pale de rotor (15, 15') est amenée par rotation dans une position de repos.

4. Procédé selon l'une quelconque des revendications 1 à 3, **caractérisé en ce que** la position d'immobilisation, à savoir la position immobilisée par freinage, est comparée en tant que valeur réelle à une valeur de consigne prédéterminée du freinage.

5. Procédé selon la revendication 4, **caractérisé en ce que** la valeur de consigne du freinage en tant que valeur moyenne de plusieurs mesures de la position d'immobilisation est déterminée à partir de plusieurs processus de freinage.

6. Procédé selon la revendication 4 ou 5, **caractérisé en ce qu'**un message d'alarme ou un message de maintenance est généré lorsque la valeur de freinage passe au-dessus de la valeur de consigne du freinage.

7. Procédé selon l'une quelconque des revendications 1 à 6, **caractérisé en ce qu'**un message de maintenance concernant l'état d'un frein utilisé pour le processus de freinage est généré pendant le freinage de la pale de rotor (15, 15') et lorsque la pale de rotor (15, 15') passe au-dessus d'une deuxième position de rotation prédéterminée.

8. Procédé selon l'une quelconque des revendications 1 à 7, **caractérisé en ce que** la position d'immobilisation de la pale de rotor (15, 15') est enregistrée dans des intervalles de temps prédéterminés.

9. Procédé selon l'une quelconque des revendications 1 à 8, **caractérisé en ce que** la position d'immobilisation est enregistrée pendant un test de sécurité ou pendant un autocontrôle de l'éolienne (10).

10. Procédé selon l'une quelconque des revendications 1 à 9, **caractérisé en ce que** le freinage de la rotation de la pale de rotor (15, 15') est mis en oeuvre lorsque la pale de rotor (15, 15') est mise en drapeau.

11. Procédé selon l'une quelconque des revendications 1 à 10, **caractérisé en ce que** la position d'immobilisation de la pale de rotor (15, 15') est mémorisée dans une unité de mémoire et/ou est analysée dans une unité d'analyse.

12. Éolienne (10) comportant un rotor (11) et au moins une pale de rotor (15, 15') à angle réglable, montée sur le rotor (11), **caractérisée en ce que** l'éolienne (10) est utilisée conformément à un procédé selon l'une quelconque des revendications 1 à 11.
